# EUROPÄISCHE PATENTSCHRIFT

(11) **EP 0 528 339 B1**
(45) Veröffentlichungstag und Bekanntmachung des Hinweises auf die Patenterteilung: **08.05.1996**
(21) Anmeldenummer: 92113709.7
(22) Anmeldetag: 12.08.1992
(51) Int. Cl.: G01M 15/00, G01N 7/14

(54) **Kammer (SHED) mit Volumenausgleich zur Messung von Verdampfungsemissionen eines Fahrzeugs und/oder Fahrzeugteils**
Variable volume chamber for measuring vehicle exhaust emissions
Chambre à volume variable pour la mesure des gaz d'échappement d'un véhicule

(30) Priorität: 20.08.1991 DE 4127435
(43) Veröffentlichungstag der Anmeldung: 24.02.1993
(73) Patentinhaber: WEISS UMWELTTECHNIK GmbH, D-35447 Reiskirchen (DE)
(72) Erfinder: Hehl, Karl-Heinz, Dipl.-Ing., W-6300 Giessen (DE)
(74) Vertreter: Stoffregen, Hans-Herbert, Dr. Dipl.-Phys.

(56) Entgegenhaltungen:
- DE-A- 1 598 579
- DE-A- 2 123 375
- US-A- 5 167 146

## Beschreibung

Die Erfindung bezieht sich auf eine Kammer (SHED) mit Volumenausgleich zur Messung von Verdampfungsemissionen eines in der Seitenwandungen, Boden- und Deckenwandung aufweisenden Kammer angeordneten Fahrzeugs und/oder Fahrzeugteils, wobei die Kammer während der Messung bei sich ändernder Kammerinnentemperatur und/oder sich änderndem außerhalb der Kammer herrschendem Außendruck verschlossen ist.

Um Verdampfungsemissionen in Form von vorzugsweise Kohlenwasserstoffen, die von Fahrzeugen an die Umgebungsluft abgegeben werden, messen zu können, werden Kammern in Form von SHEDs (SHED = Seald Housing for Evaporative Determination) benötigt. Entsprechende Kammern müssen leicht verschließbar sein, im geschlossenen Zustand Kohlenwasserstoff gasdicht sein und grundsätzlich eine rechteckige Form aufweisen. Außerdem dürfen die Innenflächen der Kammern keine Kohlenwasserstoffe aufnehmen oder abgeben und müssen gegenüber diesen auch undurchlässig sein.

Zur Messung der Kohlenwasserstoffe werden z. B. Flammenionisationsdetektoren benutzt, die von aus der Kammer abgesaugtem Gas durchströmt werden, um das Gas anschließend an die Kammer wieder abzugeben.

Entsprechende SHEDs haben Abmessungen von in etwa 3000 mm Höhe, 3500 mm Breite und 6000 bis 10000 mm Tiefe. Neuere Vorschriften fordern, daß die Verdampfungsemissionen bei einem nicht im Betrieb befindlichen Fahrzeug bei wechselnden Temperaturen über einen Zeitraum von in etwa 72 Stunden gemessen werden, wobei während dieser Zeit drei Temperatur-Tageszyklen mit Temperaturen im Bereich von 18,3 bis 40,6 °C simuliert werden.

Aufgrund der sich ändernden Temperaturverhältnisse und gegebenenfalls von über den Meßzeitraum erfolgende Druckänderungen ist es erforderlich, daß entsprechende SHEDs mit Einrichtungen zum Volumenausgleich versehen sind, um auf diese Weise die im ppm-Bereich liegenden Kohlenwasserstoffkonzentrationen hinreichend genau bestimmen zu können.

Zusätzliche Voraussetzung ist dabei, daß bei verschlossener Kammer das Volumen reproduzierbar mit einer Genauigkeit von 0,005 x V_{N} (V_{N} = Nennvolumen) eingehalten werden kann. Die bei Druckdifferenzen im Bereich bis zu 27,5 Millibar und den vorgegebenen Temperaturintervallen auftretenden Volumenänderungen liegen im Bereich bis zu 10 % des Ausgangsvolumens, so daß bekannte geringe Volumenänderungen kompensierende, z. B. aus Polyvinylfluorid bestehende Membrane, die in einer Wandung der Kammer eingelassen sind, nicht ausreichen.

Daher wurde bereits vorgeschlagen, flexible Beutel in die Kammer hineinzuhängen bzw. außerhalb der Kammer anzuordnen und mit dieser zu verbinden. Durch die Beutel ist jedoch eine hinreichend gleichmäßige Temperierung und Durchspülung in diesen nicht möglich, so daß sich eine gleichmäßige Verteilung der zu bestimmenden Gaskonzentrationen innerhalb der Kammer oder Beutel nicht einstellen kann.

Auch ist es bekannt, die Kammer kontinuierlich durchströmen zu lassen, wobei gleichzeitig eine Volumen- und Konzentrationsmessung erfolgt (sogenannte Hybrid-SHEDs). Dabei sind nicht nur Nachteile in bezug auf die zusätzlichen Meßeinrichtungen in Kauf zu nehmen, sondern es stellt sich ebenfalls das Problem einer reproduzierbaren Konzentrationsmessung, da nicht sichergestellt ist, daß sich eine homogene Atmosphäre innerhalb der Kammer zu jeder Zeit der Prüfung in hinreichendem Umfang einstellt.

Schließlich soll vorgeschlagen sein, einen SHED mit beweglicher Deckenwandung auszubilden, wobei eine Bewegung selbst über einen Stellmotor ermöglicht wird. Hierzu ist es erforderliche, daß einerseits ein Druckmeßgerät mit der Kammer verbunden ist, um über dieses und einen Regler Steuersignale an den Stellmotor zu liefern, um die Deckenwandung anzuheben bzw. abzusenken. Abgesehen von dem zusätzlichen konstruktiven Aufwand sind zumindest bei kleinen Druckänderungen Probleme bei der Reproduzierbarkeit gegeben.

Es sind zwar Meßeinrichtungen bekannt, die zur Bestimmung von z.B. Materialfeuchte, Säuregehalt oder in einem Material vorhandenem Gas bestimmt sind, ohne daß jedoch ein Bezug auf ein SHED erfolgt. Vielmehr handelt es sich im wesentlichen um Laborgeräte, deren Funktion jedoch nicht auf große Kammern übertragbar ist. Entsprechende Geräte sind beschrieben z.B. in DE-A 15 98 579, JP 1-79 645 in Patents Abstracts of Japan, Vol. 13/Wo. 306, 13.07,1989, P-897, DE-A 30 40 268, GB-A 10 44 208, DE-A 39 14 828, DE-U 73 44 321.

Der vodiegenden Erfindung liegt das Problem zugrunde, eine Kammer (SHED) mit Volumenausgleich, insbesondere bis zu 10 % bis 20 % des Ausgangsvolumens zur Messung von Veidampfungsemissionen eines in der Kammer vorhandenen Fahrzeuges und/oder Fahrzeugteils zur Verfügung zu stellen, wobei das Ausgleichsvolumen gut temperiert und einwandfrei durchspült werden kann und wobei sowohl im Ausgleichsvolumen als auch in der Kammer eine homogene Atmosphäre herrscht, daß sich also insbesondere keine Tot- oder Restvolumina im Ausgleichsvolumen ansammeln können.

Das Problem wird erfindungsgemäß im wesentlichen dadurch gelöst, daß die Deckenwandung oder zumindest ein Abschnitt dieser kammerdruckabhängig selbsttätig verstellbar ist, daß das Gewicht der verstellbaren Deckenwandung oder deren Abschnitt durch ein Gegengewicht ausgleichbar ist und daß die verstellbare Deckenwandung oder deren Abschnitt gegenüber der Kammer über eine Flüssigkeitsdichtung oder flexible Dichtung abgedichtet ist.

Durch die erfindungsgemäße Maßnahme, mit einer in etwa der Bodenfläche der Kammer entsprechenden Fläche druckabhängig - ohne zusätzliche Druckmeßeinrichtungen und Stellmotore - selbstregulierend einen Volumenausgleich vorzunehmen, wobei aufgrund der Gewichtskoiipensation der verstellbaren Deckenwandung bzw. deren Abschnittes sichergestellt ist, daß Volumenänderungen im erforderlichen Umfang reproduzierbar erfaßbar sind, ist mit einfachen Maßnahmen gewährleistet, daß die Vemdanipfungsemissionen hinreichend genau und reproduzierbar gemessen werden können. Die Volumenänderungen selbst können dadurch erfaßt werden, daß der Verstellweg der Deckenwandung bzw. deren Abschnitts z. B. mechanisch oder elektrisch gemessen wird.

Sofern die Abdichtung über eine Flüssigkeitsdichtung erfolgt, indem ein umlaufender Rand der Deckenwandung bzw. dessen Abschnitts in eine Flüssigkeitsrinne eintaucht, ist vorgesehen, daß die Flüssigkeit schwer verdampfbar ist und keine Kohlenwasserstoffe aufnimmt oder abgibt, so daß infolgedessen eine Beeinträchtigung der Atmosphäre innerhalb der Kammerweitgehend ausgeschlossen ist. Dabei sollte selbstverständlich das Flüssigkeitsniveau überwacht werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch der nachfolgenden Beschreibung von der Zeichnung zu entnehmenden bevorzugten Ausführungsbeispielen.

Es zeigen:
- Fig. 1: eine Prinzipdarstellung einer Kammer zur Messung von Verdampfungsemissionen eines in dieser angeordneten Fahrzeuges,
- Fig. 2: eine erste Ausführungsform einer Kammer gemäß Fig. 1 mit Volumenausgleich,
- Fig. 3: eine zweite Ausführungsform einer Kammer mit Volumenausgleich und,
- Fig. 4: eine dritte Ausführungsform einer Kammer mit Volumenausgleich.

Um Verdampfungsemissionen eines Fahrzeuges bei wechselnden Temperaturen über einen Zeitraum von ca. 72 Stunden messen zu können, wobei Tageszyklen im Temperaturbereich zwischen 18,3 und 40,6 °C simuliert werden, ist eine leicht verschließbare Kammer (10) rechteckiger Form vorgesehen, die über den gesamten Temperatur- und Druckbereich Kohlenwasserstoff gasdicht sind. Die verwendeten Materialien für die Innenflächen der Kammer (10) sind so gewählt, daß Kohlenwasserstoffe und Methanol weder absorbiert noch desorbiert werden können.

Um in der Kammer (10) eine gewünschte Temperatur einstellen zu können, ist ein Temperatur-Zeitprogrammregler (12) vorgesehen, der vorzugsweise mit einem Rechner (14) verbunden ist.

Um die durch die Temperatur- und/oder Druckänderungen hervorgerufenen Volumenänderungen auszugleichen, weist die Kammer (10) einen rein schematisch dargestellten und mit dem Bezugszeichen (16) versehenen Volumenausgleich auf, der zur Bestimmung der Konzentration der zu messenden Verdampfungsemissionen, also der Kohlenwasserstoffe gleichfalls von dem Rechner (14) erfaßt wird.

Die Verdampfungsemissionen selbst werden vorzugsweise über einen an die Kammer (10) angeschlossenen und von der Kammeratmosphäre im Kreislauf durchströmten Flammenionisationsdetektor (18) ermittelt, dessen Werte dem Rechner (14) ebenfalls zuführbar sind.

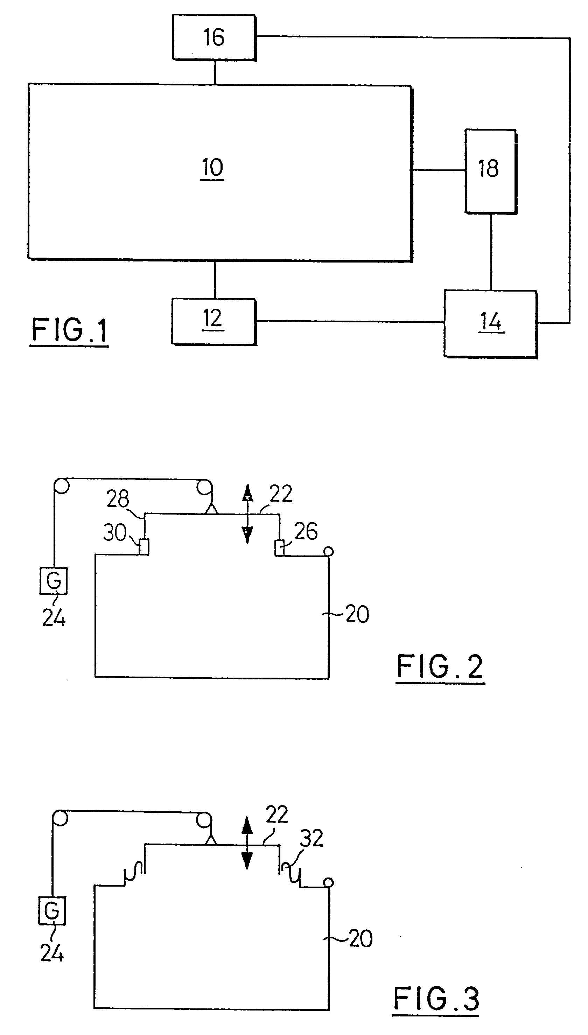

Um reproduzierbare Messungen der Volumenänderungen durchzuführen, wobei gleichzeitig in dem Kammerinnenraum eine homogene Atmosphäre sichergestellt sein soll, sind verschiedene Möglichkeiten vorgesehen, die den Fig. 2 und 3 zu entnehmen sind. Dabei stellen die Maßnahmen, durch die ein Volumenausgleich erfolgt, sicher, daß Volumenänderungen im hinreichenden Umfang reproduzierbar erfaßbar sind und daß in dem Ausgleichsvolumen keine Tot- oder Restvolumen ausbildbar sind und ersteres zudem eine dem Kammerinnenraum entsprechende Temperatur aufweist und hinreichend durchspült ist, also eine Konzentration aufweist, die der Kammeratmosphäre entspricht.

Nach Fig. 2 weist eine Kammer (20) eine druckabhängig und ohne Vorhandensein von Stellmotoren oder ähnliches anhebbare bzw. absenkbare Deckenwandung (22) auf, deren Gewicht durch ein Ausgleichsgewicht (24) kompensiert ist. Die Deckenwandung (22) bzw. der anhebbare bzw. absenkbare Abschnitt der Deckenwandung der Kammer (20) ist gegenüber der Kammer über eine Flüssigkeitsdichtung (26) abgedichtet. Hierzu ragt ein umlaufender Rand (28) der Deckenwandung (22) in eine eine Flüssigkeit (30) aufweisende Rinne hinein. Bei der Flüssigkeit (30) handelt es sich um eiiie schwer verdampfbare. Vorzugsweise kann ein Paraffinöl benutzt werden.

Das Ausführungsbeispiel der Fig. 3 unterscheidet sich von dem der Fig. 2 dahingehend, daß der anhebbare bzw. absenkbare Abschnitt der Deckenwandung (22) bzw. diese selbst, deren Gewicht gleichfalls durch ein Gegengewicht (24) kompensiert ist, gegenüber der Kammer über eine Dichtung in Form z.B. einer Membran wie Rollmembran (32) abgedichtet ist.

Durch die den Fig. 2 und 3 zu entnehmenden Maßnahmen ist auf einfache Weise ein Volumenausgleich möglich, der über nicht dargestellte und mit der Deckenwandung (22) verbundene Einrichtungen bzw. über die Verbindung zwischen dem Gegengewicht und der Deckenwandung (22) abgreifbar ist.

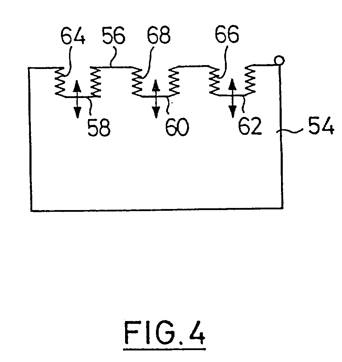

Ein Volumenausgleich bei einer Kammer (54) nach Fig. 4 erfolgt dadurch, daß der Deckenbereich (56) der Kammer (54) verstellbare Abschnitte (58), (60) und (62) aufweist, die gegenüber der Kammer (54) über Faltenbälge (64), (66) und (68) abgedichtet sind.

Schließlich ist zu bemerken, daß es bei der bzw. den Einrichtungen, deren Verdampfungsemissionen zu messen sind, nicht nur um Fahrzeuge, sondern auch um sonstige Betankungseinrichtungen wie Tanks, Zapfsäulen o.ä. handeln kann.

## Patentansprüche

1. Kammer (SHED) mit Volumenausgleich zur Messung von Verdampfungsemissionen eines in der Seitenwandungen, Boden- und Deckenwandung aufweisenden Kammer angeordneten Fahrzeugs und/oder Fahrzeugteils, wobei die Kammer während der Messung bei sich ändernder Kammerinnentemperatur und/oder sich ändernden außerhalb der Kammer herrschendem Außendruck verschlossen ist,
**dadurch gekennzeichnet,**
daß die Deckenwandung (22) oder zumindest ein Abschnitt dieser kammerdruckabhängig selbsttätig verstellbar ist, daß das Gewicht der verstellbaren Deckenwandung oder deren Abschnitt durch ein Gegengewicht (24) ausgleichbar ist und daß die verstellbare Deckenwandung oder deren Abschnitt gegenüber der Kammer (20) über eine Flüssigkeitsdichtung (26, 30) oder flexible Dichtung (32) abgedichtet ist.

2. Kammer nach Anspruch 1,
**dadurch gekennzeichnet,**
daß die Flüssigkeitsdichtung eine schwer verdampfbare Flüssigkeit und vorzugsweise Paraffinöl enthält.

3. Kammer nach Anspruch 1,
**dadurch gekennzeichnet,**
daß die flexible Dichtung eine Membran wie Rollmembran (32) ist.

4. Kammer nach zumindest einem der vorhergehenden Ansprüche,
**dadurch gekennzeichnet,**
daß zum Volumenausgleich der Kammer (54) mehrere Abschnitte (58, 60, 62) der Deckenwandung (56) vorgesehen sind, die gegenüber der Wandung z. B. über Faltenbälge (64, 66, 68) abgedichtet sind.

## Claims

1. Chamber (SHED) with volume balancing for measuring vaporization emissions of a vehicle and/or vehicle part disposed in the chamber, which has side walls, a base wall and a cover wall, the chamber being closed during the measurement with a varying internal temperature of the chamber and/or varying external pressure prevailing outside the chamber, characterized in that the cover wall (22), or at least a section of the latter, is automatically adjustable, dependent on the chamber pressure, in that the weight of the adjustable cover wall or section of it is capable of being balanced by a counterweight (24) and in that the adjustable cover wall or section of it is sealed relative to the chamber (20) by a fluid seal (26, 30) or flexible seal (32).

2. Chamber according to Claim 1, characterized in that the fluid seal contains a fluid which does not vaporize easily, preferably paraffin oil.

3. Chamber according to Claim 1, characterized in that the flexible seal is a membrane such as a roll membrane (32).

4. Chamber according to at least one of the preceding Claims, characterized in that, for the purpose of volume balancing, the chamber (54) has several sections (58, 60, 62) of the wall cover (56) which are sealed relative to the wall by, for example, bellows (64, 66, 68).

## Revendications

1. Chambre à volume variable (enceinte scellée pour la détermination de l'évaporation) (SHED) pour mesurer les émissions de vapeur d'un véhicule et/ou d'une partie de véhicule, placés dans une chambre ayant des parois latérales, un fond et un plafond, la chambre étant fermée pendant la mesure, la température à l'intérieur de la chambre ou la pression extérieure à la chambre variant, caractérisée en ce que le plafond (22) ou au moins un segment de celui-ci est réglable automatiquement en fonction de la pression dans la chambre, le poids du plafond réglable ou d'une partie de celui-ci étant compensé par un contrepoids (24), et le plafond réglable ou son segment de plafond réglable est rendu étanche par rapport à la chambre (20) par un joint à liquide (26, 30) ou un joint souple (32).

2. Chambre selon la revendication 1, caractérisée en ce que le joint à liquide contient un liquide difficilement vaporisable et de préférence de l'huile de paraffine.

3. Chambre selon la revendication 1, caractérisée en ce que le joint souple est une membrane telle qu'une membrane à déroulement (32).

4. Chambre selon au moins l'une des revendications précédentes, caractérisée en ce que, pour compenser le volume de la chambre (54), le plafond (56) comporte plusieurs segments (58, 60, 62) qui sont rendus étanches par rapport au plafond, par exemple par des soufflets (64, 66, 68).
